# EUROPEAN PATENT APPLICATION

(11) **EP 1 526 363 A1**
(43) Date of publication of application: **27.04.2005**
(21) Application number: 04256402.1
(22) Date of filing: 18.10.2004
(51) Int. Cl.: G01D 5/347

(54) **Rotary encoder**

(30) Priority: 22.10.2003 JP 2003362015
(71) Applicant: FANUC LTD, Minamitsuru-gun, Yamanashi 401-0597 (JP)
(72) Inventor: Kawai, Tomohiko, Minamitsuru-gun Yamanashi, 401-0304 (JP); Taniguchi, Mitsuyuki, Gotenba-shi Shizuoka, 412-0045 (JP); Imai, Keisuke FANUC Manshonharimomi, Minamitsuru-gun Yamanashi, 401-0511 (JP); Terashima, Hiroya FANUC Manshonharimomi, Minamitsuru-gun Yamanashi, 401-0511 (JP); Minami, Hiroshi FANUC Manshonharimomi, Minamitsuru-gun Yamanashi, 401-0511 (JP)
(74) Representative: Billington, Lawrence Emlyn

(57) **Abstract**

A rotary encoder is provided which is easily position-adjusted in relation to a rotary shaft (21), and is reduced in accuracy deterioration attributable to rotational instability and the like which is caused after attachment to the rotary shaft (21). The encoder is a device attached to the rotary shaft (21) for outputting signals with the rotation of the shaft (2). The encoder includes a rotary disk (2), a detector (4) for detecting rotational position of the rotary disk (2), a disk holder 0 for fixedly attaching the rotary disk (2) to the rotary shaft (21), and a housing (7) for fixing the detector (4) such that the detector (4) is opposed to the rotary disk (2). The encoder comprises a retainer (8) attachable to and detachable from the disk holder (6) and the housing (7) for retaining a positional relationship between the disk holder (6) and the housing (7).

## Description

### BACKGROUND OF THE INVENTION

### 1. Field of the Invention

The present invention relates to a rotary encoder for detecting a rotational position, a rotational velocity and the like of a rotary shaft, and more specifically to an attachment structure of the rotary encoder to the rotary shaft.

### 2. Description of Related Art

An ultra-precision motor requires high-precision positioning. Therefore, the motor is provided with a rotary encoder that is supported for example by an air bearing and also carries out position detection.

In case that a rotary encoder is combined with the ultra-precision motor that requires the high-precision positioning, a disk of the rotary encoder provided with slits for position detection is fitted to the rotary shaft of the motor in the conventional arts. Detecting means is mounted on a stationary portion supporting the rotary shaft to detect slits provided to the disk and to find a rotation angle. It is required that positional relation between the disk of the rotary encoder and the detecting means be properly adjusted in order to realize the accurate positioning.

As for the motor attached with a rotary encoder, it is advantageous in terms of maintenance to prepare a working part of the rotary encoder in advance and fix the working part of the rotary encoder to the shaft of the motor. In the working part of the rotary encoder, positional relation between the disk rotationally supported and the detecting means can be previously adjusted at the time of construction of the mechanism, so that the positional relation does not have to be adjusted when the rotary encoder is combined with the motor.

In case that the positional relation between the disk and the detecting means is adjusted after they are individually installed, it is necessary to utilize a special adjustment device or the like. When the rotary encoder is constructed as one working part, however, no such special adjustment device is needed.

An example of a configuration in which a rotary encoder is attached to a rotary shaft as one working part is disclosed in for example JP 2605362B.

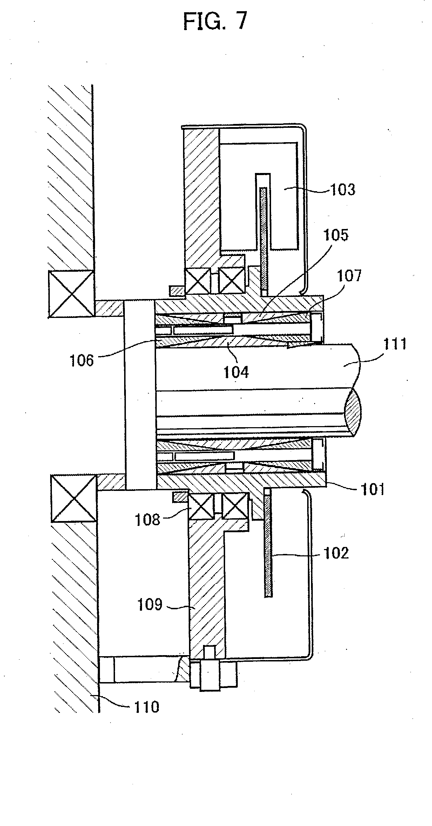

FIG. 7 is a schematic cross-sectional view for explaining one example of a configuration in which a rotary encoder serves as a single working part. In FIG. 7, the code plate (disk) 102 is attached to a flange of the outer circumferential portion of the hollow rotary shaft 101. The hollow rotary shaft 101 is interfitted with the rotary shaft 111 to be adjustable in its shaft center, by means of chevron sleeves 104 and 105 arranged to face each other and a pair of wedge sleeves 106 and 107.

The detector 103 is mounted on the retainer 109 fixed to the stationary portion 110.

Axis alignment includes the steps of measuring the eccentricity of the hollow rotary shaft 101 by using a dial gauge or the like while rotating the rotary shaft 111 and forcibly displacing the hollow rotary shaft 101 on the basis of an eccentricity amount and direction found through the measurement to change the positional relation between the chevron sleeves and the wedge sleeves.

As seen in the above example, in the unitized rotary encoder, a bearing, such as a ball bearing, is generally applied to support the disk to be rotatable in relation to the detecting means in the unit.

When the unitized rotary encoder is combined with the ultra high-precision motor, if a ball bearing or the like is used to rotationally support the disk in the unit like the above example, the ball bearing is left in the encoder unit to rotationally support the disk and a member for supporting the disk after the encoder unit is fitted to the shaft, and the ball bearing rotates along with the rotation of the shaft. This causes rotational unstableness at the time of ultra high-precision rotation and positioning, and there is fear that the rotational unstableness has an adverse affect on rotational smoothness and accuracy in angle detection.

It is possible to reduce effects of abrasion of the bearing by utilizing a low friction bearing, such as a fluid bearing, in place of the ball bearing. Such a countermeasure makes the encoder unit large in size and complicates the construction of the unit.

### SUMMARY OF THE INVENTION

The present invention provides a rotary encoder capable of easily adjusting positional relation between a rotary disk and a detector in attachment of the rotary encoder to a rotary shaft, and also preventing deterioration of detection accuracy of the rotary encoder after the attachment to the rotary shaft. According to the present invention, a bearing for rotatably supporting the rotary disk relative to the detector is eliminated in the state where the rotary encoder is attached to the rotary shat.

A rotary encoder of the present invention is attached to a rotary shaft for outputting signals with rotation of the rotary shaft. According to one aspect of the present invention, the rotary encoder comprises: a rotary disk; a disk holder holding the rotary disk to be fixedly attached to the rotary shaft with the rotary disk; a detector for detecting a rotational position of the rotary disk; and a housing for supporting the detector to be stationary in confronting relation to the rotary disk, wherein the disk holder and the housing are held by a retainer such that positional relation between the disk holder and the housing is retained in attachment of the rotary encoder to the rotary shaft.

According to another aspect of the present invention, the rotary encoder comprises: a rotary disk; a disk holder holding the rotary disk to be fixedly attached to the rotary shaft with the rotary disk; a detector for detecting a rotational position of the rotary disk; a housing for supporting the detector to be stationary in confronting relation to the rotary disk; and a retainer provided to be attachable to and detachable from the disk holder and the housing. The retainer is attached to the disk holder and the housing such that positional relation between the disk holder and the housing is retained. The retainer is detached from the disk holder and the housing in a state where the disk holder is fixedly attached to the rotary shaft.

The retainer may comprise a stationary member and a rotary member rotatably supported by the stationary member. In this case, the stationary member is attached to the housing and the rotary member is attached to the disk holder so that positional relation between the rotary disk in rotation and the detector is adjustable. The rotary member may be rotatably supported by the stationary member through a bearing.

The rotary encoder of the present invention is constituted as a unit capable of adjusting positional relation between the rotary disk and the detector and retaining the positional relation using a retainer before the encoder is installed in a component such as an electric motor having a rotary shaft. Thus, the rotary encoder is installed in the component in a state where the rotary disk retains adjusted position with respect to the detector. After the rotary encoder is installed to the component, the retainer is detached so that the disk holder holding the rotary disk is supported only by the rotary shaft.

According to the present invention, since the relative position between the rotary disk and the detector can be adjusted before the rotary encoder is installed to the component, the adjustment in installing the rotary encoder in the component is facilitated. Furthermore, since there is not remained a bearing for rotatably supporting the rotary shaft in the encoder after the encoder is installed in the component, deterioration in detection accuracy due to the rotation unstableness of the rotary disk caused by the bearing, is prevented.

### BRIEF DESCRIPTION OF THE DRAWINGS

FIGS. 1a through 1c are schematic views of a configuration, for explaining a first embodiment of a rotary encoder of the present invention;
FIGS. 2a and 2b are views for explaining attachment of a position-adjusted rotary encoder of the present invention to a motor;
FIG. 3 is a view for explaining attachment of the position-adjusted rotary encoder of the present invention to the motor;
FIG. 4 is a schematic view of a configuration, for explaining a second embodiment of the rotary encoder of the present invention;
FIG. 5 is a view for explaining attachment of the position-adjusted rotary encoder of the present invention to the motor;
FIG. 6 is a view for explaining attachment of the position-adjusted rotary encoder of the present invention to the motor; and
FIG. 7 is a view for explaining an example of a configuration of a conventional rotary encoder.

### DETAILED DESCRIPTION

A rotary encoder of the present invention will be described referring to the attached drawings.

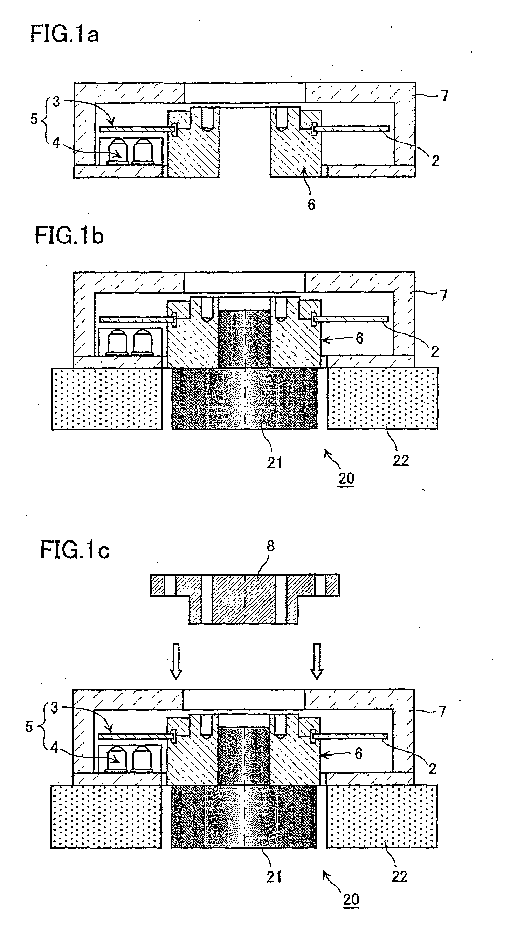

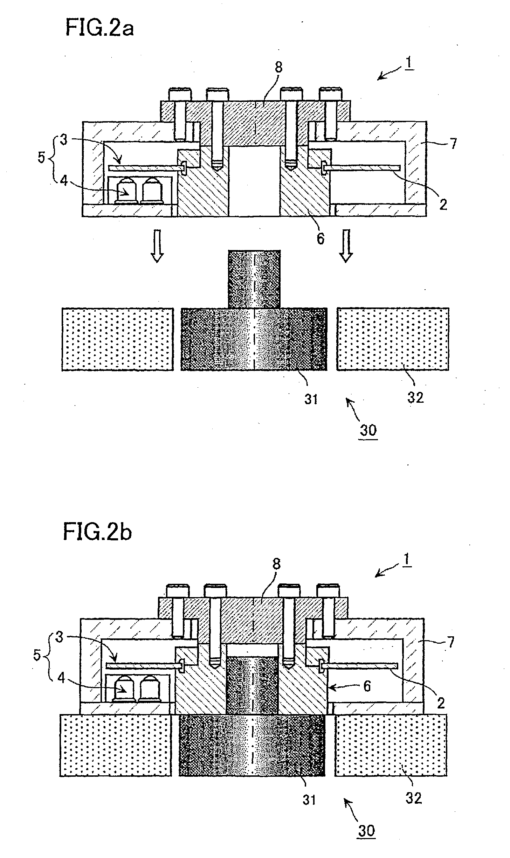

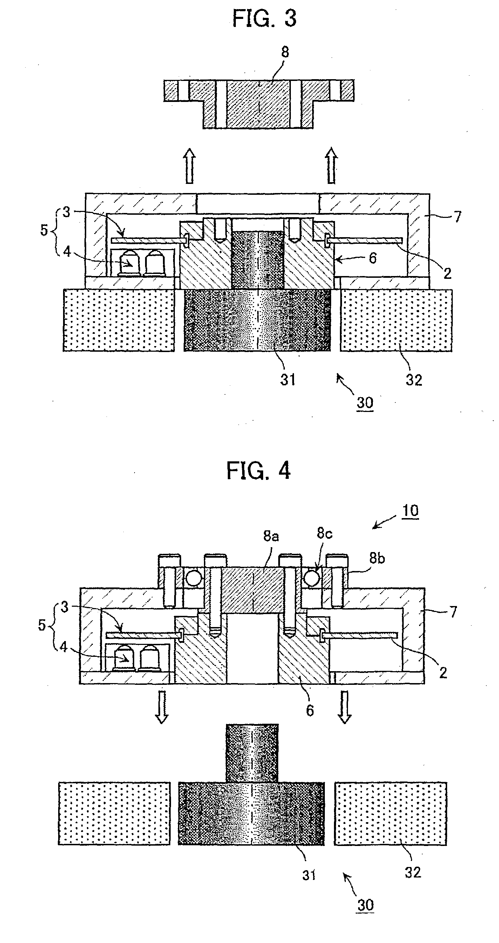

FIGS. 1a-1c, 2a-2b and 3 are schematic views of a configuration, for explaining a first embodiment of the rotary encoder of the present invention. FIGS. 1a-1c are views for explaining a position adjustment of a rotary disk and detecting means of the rotary encoder, and FIGS. 2a-2b and 3 are views for explaining attachment of the position-adjusted rotary encoder to a motor. FIG. 1a shows a state before the position adjustment of the rotary disk and the detecting means is carried out; FIG. 1b shows a state of the position adjustment of the rotary disk and the detecting means; and FIG. 1c shows a state in which a retainer is installed to keep positions of the rotary disk and the detecting means after the position adjustment.

Referring to FIGS. 1a through 1c, a rotary encoder 1 has an angle-detecting mechanism 5. The angle-detecting mechanism 5 is provided with a detection portion 3 formed on a rotary disk 2 and a detector 4 for. detecting the detection portion 3. As an angle-detecting method using the angle-detecting mechanism 5, an optical detecting method, a magnetic detecting method or the like can be applied. The following explanation will be provided, taking the optical detecting method as an example.

In the case of the optical detecting method, the detection portion 3 formed on the rotary disk 2 consists of a portion that transmits or reflects light incident from the outside. The transmitted light or the reflected light is detected by the detector 4 including a light sensor and the like, to thereby detect a rotation angle and rotational frequency of the rotary disk 2.

As a consequence, the detection portion 3 is formed of a portion that transmits light or a portion that reflects light or a portion that absorbs light or the like on the rotary disk 2, while the detector 4 is made up of a light-emitting portion that irradiates light directed to the detection portion 3 and a light-receiving portion that receives the light transmitted through a transmitting portion of the detection portion 3 or the light reflected from a reflecting portion of the detection portion 3.

The rotary disk 2 has the detection portion 3 on a circumference thereof. The rotation angle and rotational frequency of the rotary disk 2 can be detected from a detection state of the detection portion 3.

In the rotary encoder of the present invention, the rotary disk 2 is attached to and supported by a disk holder 6. The disk holder 6 has a cylindrical shape and includes an inner circumferential portion interfitted with an outer circumferential portion of a rotary shaft, not shown, of the motor. Once the disk holder 6 is rotated along with rotation of the rotary shaft, the rotary disk 2 is rotated, too.

An attachment position (axial and radial directions) of the rotary disk 2 in relation to the disk holder 6 may be adjustable.

The detector 4 is attached to and supported by a housing 7. The housing 7 is so formed as to have a sectional shape of a pair of U's facing each other and accommodates the disk holder 6 attached with the rotary disk 2 in the inside thereof, to thereby make the rotary disk 2 rotatable in the inside.

In an inner circumferential surface of the housing 7, there is disposed the detector 4 including a light source, a light sensor and the like in one portion opposed to the rotary disk 2. A rotational position of the rotary disk 2 is detected, based on a detection signal of the detector 4.

An attachment position (axial and radial directions) of the detector 4 in relation to the housing 7 may be adjustable.

By adjusting the attachment position of the rotary disk 2 in relation to the disk holder 6 and that of the detector 4 in relation to the housing 7, a position adjustment of the rotary disk 2 and the detector 4 can be carried out.

It is also possible to make the position adjustment of the rotary disk 2 and the detector 4 by adjusting positional relation between the disk holder 6 and the housing 7.

The position adjustment of the rotary disk and the detecting means can be carried out in the following manner. To make the position adjustment, as illustrated in FIG. 1b, the disk holder 6 attached with the rotary disk 2 is fitted to a rotary shaft 21 of an adjustment device 20 to make the rotary disk 2 rotatable. At the same time, the housing 7 attached with the detector 4 is fitted to a stationary portion 22 of the adjustment device 20 to fasten the housing 7.

In the above state, the rotary shaft 21 of the adjustment device 20 is rotated, to thereby obtain a detection signal by using the detector 4.

If the detection portion 3 of the rotary disk 2 and the detector 4 are correctly positioned, a prescribed signal waveform can be obtained from the detector 4. On the contrary, if the positioning is improper, a detected signal waveform deviates from the prescribed signal waveform.

Therefore, a displacement state of the detection portion 3 and the detector 4 is found by reference to the detection signal obtained by the detector 4, to thereby make the position adjustment to resolve the displacement. As stated, the position adjustment can be carried out by making the position adjustment (axial and/or radial direction) of the rotary disk 2 in relation to the disk holder 6 or by making the position adjustment (axial and/or radial direction) of the detector 4 in relation to the housing 7 or by making the position adjustment (axial and/or radial direction) of the disk holder 6 in relation to the housing 7 or the like.

After the position adjustment shown in FIG. 1b is completed, positional relation between the disk holder 6 and the housing 7 is retained by doing as shown in FIG. 1c, to thereby maintain positional relation between the detection portion 3 and the detector 4. This retention of the positional relation is performed by a retainer 8. The retainer 8 is so formed as to expand over the disk holder 6 and the housing 7 to be connected to both of them, to thereby retain the positional relation between the disk holder 6 and the housing 7. Although connecting means is arbitrary, FIG. 1c shows an example of bolting.

If the disk holder 6 and the housing 7 are supported by the retainer 8 in a state where the position adjustment shown in FIG. 1b is completed, the positional relation between the disk holder 6 and the housing 7 is maintained in a state where the disk holder 6 and the housing 7 are position-adjusted in the prescribed manner. Accordingly, the positional relation between the detection portion 3 and the detector 4 is kept in the position-adjusted state.

Next, attachment of the rotary encoder, in which the position adjustment is completed, to the motor will be described with reference to FIGS. 2a and 2b.

As illustrated in FIG. 1c, since the retainer 8 maintains the positional relation between the disk holder 6 and the housing 7, even if the rotary encoder 1 is detached from the adjustment device 20, there generates no deviation in positional relation between the disk holder 6 and the housing 7.

FIG. 2a shows a state where the rotary encoder 1, in which the positional relation is retained by the retainer 8 through the operation shown in FIG. 1c, is to be attached to a motor 30. FIG. 2b shows a state where the attachment is completed.

A rotary shaft 31 of the motor 30 is inserted into a bore of the disk holder 6 provided to the rotary encoder (FIG. 2a). An end face of the housing 7, which faces in an axial direction, is brought into contact with a surface of a stationary portion 32 of the motor 30 to be fixed thereto (FIG. 2b).

As mentioned above, the positional relation between the disk holder 6 and the housing 7 is retained as adjusted by the retainer 8. Therefore, even during the process for attaching the rotary encoder 1 to the motor 30 as illustrated in FIGS. 2a and 2b, the positional relation between the disk holder 6 and the housing 7 is maintained as adjusted, and the positional relation between the detection portion 3 and the detector 4 is kept as prescribed.

As illustrated in FIG. 3, the retainer 8 is detached from the rotary encoder 1. In the state shown in FIG. 2b, the disk holder 6 and the housing 7 are fixed by means of the retainer 8, so that the rotary shaft 31 of the motor cannot be rotated.

Therefore, the retainer 8 fastened onto the disk holder 6 and the housing 7 is detached therefrom. At this point, the disk holder 6 is fitted to the rotary shaft 31 of the motor, and the housing 7 to the stationary portion 32 of the motor through the process shown in FIG. 2b. For this reason, the detachment of the retainer 8 does not cause deviation in positional relation between the disk holder 6 and the housing 7.

Due to the removal of the retainer 8, the disk holder 6 and the rotary disk 2 become rotatable along with rotation of the rotary shaft 21 of the motor. At this moment, the positional relation between the detection portion 3 of the rotary disk 2 and the detector 4 stays as determined, which enables detection of a correct angle position.

A second embodiment of the rotary encoder of the present invention will be described below with reference to FIGS. 4 through 6.

The second embodiment has a configuration in which the retainer 8 is divided into two parts, namely a rotating portion 8a and a stationary portion 8b. The rotating portion 8a and the stationary portion 8b are connected to each other through a rotation-supporting portion 8c, such as a bearing. With such a configuration, the rotating portion 8a and the stationary portion 8b are rotatable, so that the disk holder 6 and the rotary disk 2 attached to the rotating portion 8a and the housing 7 attached to the stationary portion 8b then become rotatable.

Since the disk holder 6 and the housing 7 are made to be rotatable, the rotary disk 2 can be rotated without using the adjustment device required for the rotating operation of the disk holder 6, which is performed during the position adjustment in the first embodiment.

The configuration of the second embodiment may be designed to be similar to that of the first embodiment apart from the above-described part of the configuration, and the common parts of the configuration will be omitted here.

FIGS. 4 through 6 show a process of attaching the rotary encoder directly to the motor without using the adjustment device.

FIG. 4 shows a state before the rotary encoder 1 is attached to the motor 30. In the rotary encoder 1, the disk holder 6 and the housing 7 are rotatable due to the retainer 8. At this point, positioning of the disk holder 6 and the housing 7, that is, positioning of the detection portion 3 and the detector 4, is not yet adjusted.

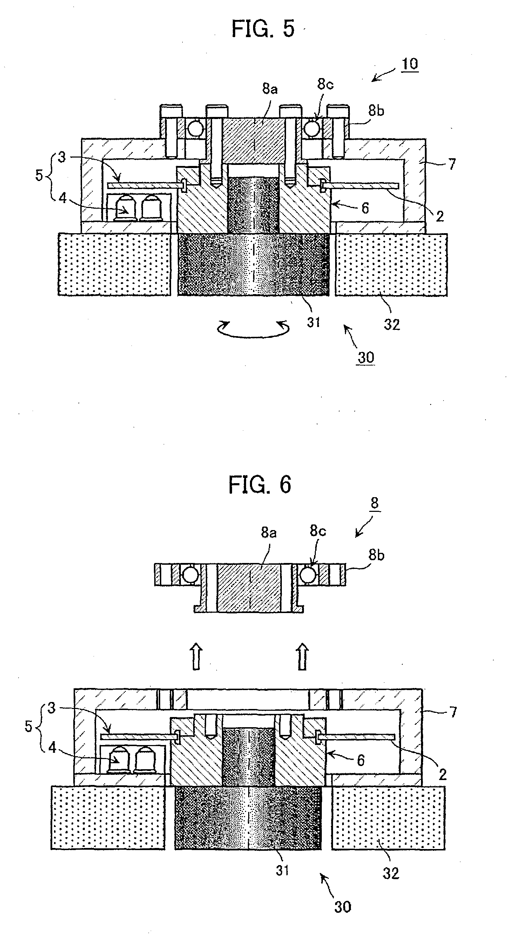

Subsequently, the rotary encoder 1 is fitted to the motor 30 in a state where the retainer 8 is still attached thereto. FIG. 5 shows a state in which the rotary encoder 1 is mounted on the motor 30. To attach the rotary encoder 1 to the motor 30, the rotary shaft 31 of the motor 30 is inserted into the bore of the disk holder 6 provided to the rotary encoder, and the end face of the housing 7, which faces in the axial direction, is brought into contact with the surface of the stationary portion 32 of the motor 30 to be fixed thereto, as described above.

In this state, the motor 30 is used as a position adjustment device to make a position adjustment. At the time of the position adjustment, the disk holder 6 is fitted to the rotary shaft 31 of the motor 30 to make the rotary disk 2 rotatable, while the housing 7 attached with the detector 4 is fitted to the stationary portion 32 of the motor 30 to fasten the housing 7.

In the above state, the rotary shaft 31 of the motor 3 0 is rotated, to thereby obtain a detection signal by using the detector 4. If the detection portion 3 of the rotary disk 2 and the detector 4 are correctly positioned, the prescribed signal waveform is obtained from the detector 4. On the contrary, if the positioning is improper, a detected signal waveform deviates from the prescribed signal waveform.

Therefore, a displacement state of the detection portion 3 and the detector 4 is found by reference to the detection signal obtained by the detector 4, to thereby make the position adjustment to resolve the displacement. As stated, the position adjustment can be carried out by making the position adjustment (axial and/or radial direction) of the rotary disk 2 in relation to the disk holder 6 or by making the position adjustment (axial and/or radial direction) of the detector 4 in relation to the housing 7 or by making the position adjustment (axial and/or radial direction) of the disk holder 6 in relation to the housing 7 or the like.

Thereafter, as illustrated in FIG. 6, the retainer 8 is detached from the rotary encoder 1. Since the disk holder 6 is fitted to the rotary shaft 31 of the motor, and the housing 7 to the stationary portion 32 of the motor, even if the retainer 8 is detached, there generates no deviation in positional relation between the disk holder 6 and the housing 7, and the disk holder 6 and the housing 7 are retained as positioned. As a consequence, a correct angle position can be detected.

According to the second embodiment, since the rotary disk can be rotated in the encoder unit, it is possible to make a fine adjustment to a position of the angle-detecting mechanism 5, and the like. Moreover, it is not necessary to attach the disk holder 6 to the shaft that is rotationally supported by the bearing separately prepared, unlike the first embodiment. This facilitates assembly of the encoder unit.

The rotary encoder of the present invention can be applied not only to an optical encoder but also to a rotary encoder based on other detection principles including a magnetic type and the like.

## Claims

1. A rotary encoder to be attached to a rotary shaft for outputting signals with rotation of the rotary shaft, comprising:
a rotary disk;
a disk holder holding said rotary disk to be fixedly attached to the rotary shaft with said rotary disk;
a detector for detecting a rotational position of said rotary disk; and
a housing for supporting said detector to be stationary in confronting relation to said rotary disk,
wherein said disk holder and said housing are held by a retainer such that positional relation between said disk holder and said housing is retained in attachment of the rotary encoder to the rotary shaft.

2. A rotary encoder to be attached to a rotary shaft for outputting signals with rotation of the rotary shaft, comprising:
a rotary disk;
a disk holder holding said rotary disk to be fixedly attached to the rotary shaft with said rotary disk;
a detector for detecting a rotational position of said rotary disk;
a housing for supporting said detector to be stationary in confronting relation to said rotary disk; and
a retainer provided to be attachable to and detachable from said disk holder and said housing.

3. A rotary encoder according to claim 2, wherein said retainer is attached to said disk holder and said housing such that positional relation between said disk holder and said housing is retained.

4. A rotary encoder according to claim 2, wherein said retainer is detached from said disk holder and said housing in a state where said disk holder is fixedly attached to the rotary shaft.

5. A rotary encoder according to claim 2, wherein said retainer comprises a stationary member and a rotary member rotatably supported by said stationary member, and said stationary member is attached to said housing and said rotary member is attached to said disk holder so that positional relation between said rotary disk in rotation and said detector is adjustable.

6. A rotary encoder according to claim 5, wherein said rotary member is rotatably supported by said stationary member through a bearing.
